# FASCICULE DE BREVET EUROPEEN

(11) **EP 4 407 211 B1**
(45) Date de publication et mention de la délivrance du brevet: **30.09.2026**
(21) Numéro de dépôt: 24152980.9
(22) Date de dépôt: 19.01.2024
(51) Int. Cl.: F16H 3/00, F16H 3/54, F16K 31/05, F16K 31/53, F16H 3/52, F16H 1/28, F16H 1/36, F16D 11/14, F16K 31/50, H02K 7/116, F16H 1/20, F16D 11/10, F16K 31/04

(54) **RÉDUCTEUR MODULAIRE**
MODULARER UNTERSETZUNGSGETRIEBE
MODULAR REDUCTION GEAR

(30) Priorité: 24.01.2023 FR 2300660
(43) Date de publication de la demande: 31.07.2024
(73) Titulaire: Bernard Controls, 95500 Gonesse (FR)
(72) Inventeur: LEPAN, Rémy, 95820 BRUYÈRES SUR OISE (FR)
(74) Mandataire: Weinstein Services & Conseils

(56) Documents cités:
- US-A- 4 114 469
- US-A1- 2018 298 988
- US-B2- 10 024 449

## Description

L'invention porte sur un réducteur de vitesse pour un système de transmission de puissance mécanique mis en œuvre en particulier dans un actionneur électrique, ou servomoteur, pour vannes ou ventelles industrielles.

Les vannes et ventelles industrielles sont utilisées dans des industries dans lesquelles des fluides (liquides ou gaz) circulent dans des canalisations, et la circulation du fluide est contrôlée par un organe mobile interposé (obturateur) dans le conduit et dont la position doit être maîtrisée voire asservie à une commande instantanée (variable au cours du temps, y compris très rapidement) pour faire face à l'effort imposé par le fluide sur l'organe mobile.

Le contrôle de la vanne ou ventelle est souvent mis en œuvre par un organe mécanique de type roue et vis sans fin, la roue étant installée sur un organe de commande de la vanne ou ventelle (des arbres transmettant la puissance) et la vis sans fin étant reliée à l'axe d'un moteur électrique rotatif. La vis sans fin et la roue associée permettent de prévoir l'irréversibilité de la transmission de puissance, puisque leur conception, en adaptant le pas de vis, permet de garantir que la vanne ou ventelle ne va pas renvoyer d'effort vers le moteur.

L'espace disponible est très faible, et le servomoteur doit donc être peu encombrant. De plus, on s'intéresse en particulier aux situations où le couple devant être appliqué est important, parce que la vanne ou la ventelle concernée est placée sur une conduite de fluide sous haute pression ou à fort débit.

Un réducteur introduisant un rapport de vitesses à choisir en fonction des circonstances (en fonction notamment de la vanne sur laquelle est installé le servomoteur) peut être introduit entre le moteur électrique et la vis sans fin.

Un capteur suit la position de l'organe obturateur, pour savoir à quel point, à chaque instant, il obture l'écoulement, et redéfinir la commande en fonction de cette information.

Un tel servomoteur peut être monté sur une vanne dans le secteur de l'énergie, notamment dans les centrales nucléaires, ou dans le secteur de l'eau, dans celui de l'industrie comme les cimenteries, ou encore dans le secteur des industries pétrolières et gazières. D'autres industries utilisent aussi de tels systèmes.

L'invention s'applique à des servomoteurs multi-tours, ou quart de tour ou plus généralement fraction de tour et à d'autres types d'actionneurs électriques. Le servomoteur peut être utilisé dans différents contextes.

Si les vannes et ventelles industrielles sont ainsi couramment contrôlées par le servomoteur asservissant leur position à une commande électronique de position calculée de manière récurrente, il est nécessaire de pouvoir, avec le même dispositif, les manœuvrer ponctuellement à la main, lors d'une part de la mise en place et de la mise en service de l'actionneur électrique, mais également à chaque fois qu'une intervention humaine est nécessaire, et cela peut être de manière programmée, ou à l'inverse de manière urgente en cas de difficulté sur le site industriel nécessitant une intervention manuelle, comme, par exemple, la perte de l'alimentation en électricité. Ainsi, un volant pour commande manuelle est accessible sur l'extérieur du servomoteur - c'est même souvent une exigence réglementaire. Mais pour la sécurité du personnel, le volant ne doit pas être entrainé lorsque le moteur fait tourner le mécanisme d'actionnement. De plus, quand c'est l'opérateur qui, manuellement, opère le mécanisme d'actionnement, il est souhaitable qu'il n'ait pas à faire bouger le moteur, alors non alimenté et inerte, ce qui du fait des frottements, serait très difficile. Ainsi, on souhaite que l'engagement de la commande manuelle déclenche une déconnexion mécanique du moteur vis-à-vis du mécanisme d'actionnement.

On connait dans la période récente des servomoteurs qui comportent entre le moteur électrique et une extrémité de la vis sans fin un réducteur couplant l'un à l'autre et qui peut être démonté et remonté avec un rapport de vitesses différent, en changeant les engrenages, selon un principe de modularité (réducteur modulaire). Ce réducteur peut notamment être un train épicycloïdal (réducteur à trois arbres, deux pignons planétaires et des satellites) dont un pignon solaire est couplé directement à la vis sans fin, une couronne est couplée au moteur, et un porte-satellites est encastré au carter du servomoteur. Dans le même système, on sait découpler le moteur de la vis sans fin depuis l'autre extrémité de la vis sans fin, par une tige traversante en translation, actionnable à la main dans un sens pour à distance, désengager le pignon solaire de la vis sans fin, un ergot basculant maintenant le pignon jusqu'à la remise en route du moteur, qui l'écarte, le pignon solaire étant ramené en encastrement avec la vis sans fin avec déplacement de la tige traversante de commande.

Ce système est néanmoins encombrant et coûteux à mettre en place et entretenir.

Il est connu de la publication US4114469 un actionneur de soupape motorisé automatique qui comprend un ensemble d'entraînement à vis sans fin destiné à recevoir le mouvement rotatif rapide d'un moteur d'entraînement et à le réduire en un mouvement linéaire ou rotatif à faible vitesse d'une tige de soupape.

Il est également connu de la publication US 2018/298988 un appareil de rappel à vitesse réglable pour un actionneur électrique qui utilise une configuration coopérative entre le dispositif d'entraînement unidirectionnel et le dispositif d'embrayage pendant l'utilisation de l'appareil afin d'éviter les dommages causés par l'unité d'exploitation entraînée par l'ensemble d'ouverture/fermeture. Néanmoins, cet appareil présente les mêmes inconvénients, à savoir son encombrement et ses coûts d'entretien et de mise en place. En outre, le document US 4 114 469 A décrit un actionneur de vanne motorisé qui permet à la fois le désengagement simultané du moteur sur les plans électrique et mécanique et le passage automatique du mode motorisé au mode manuel, et inversement.

Pour résoudre les difficultés des actionneurs de l'art antérieur, il est proposé un système de transmission de puissance mécanique pour contrôler une vanne ou une ventelle, le système de transmission comprenant un mécanisme d'actionnement pour un arbre de la vanne ou de la ventelle, le mécanisme d'actionnement disposant d'une première et d'une deuxième entrées de puissance, le système comprenant un moteur rotatif et un actionneur manuel en rotation couplés respectivement à la première et la deuxième entrées de puissance, un mécanisme de débrayage par tige exerçant une poussée pour débrayer ledit moteur vis-à-vis de la première entrée de puissance. Plus précisément, l'invention propose un système de transmission de puissance mécanique conforme à la revendication 1. Des caractéristiques additionnelles de l'invention sont énoncées dans les revendications dépendantes.

Le mécanisme de débrayage est remarquable en ce qu'il comprend une pièce meneuse et une pièce menée constituant ensemble un crabot sur un axe, la pièce menée possédant une couronne dentée et une empreinte de pièce menée de crabot, et étant couplée à la première entrée par ladite couronne dentée, au moins un pignon satellite du système de transmission de puissance et un alésage central pour couplage (complémentaire de la première entrée), par exemple un alésage cannelé, ladite pièce menée possédant un alésage central (par exemple un alésage cannelé complémentaire de ladite première entrée), la tige, pour procéder à un débrayage, traversant dans les deux alésages centraux et poussant un moyeu de la pièce meneuse.

Avec cette définition, la pièce menée, le pignon solaire et le ou les pignons satellites peuvent être inversés et intervertis en sorte de modifier le rapport de vitesses entre le moteur rotatif et le mécanisme d'actionnement. Selon l'invention, l'alésage traversant est au centre d'une première pièce qui est pièce d' entrainement telle un porte-satellite ou un pignon solaire, mais qui de plus porte une empreinte de deuxième pièce menée de crabot à utiliser en substitution quand les opérateurs souhaitent procéder à l'inversion.

Celle-ci est menée en profitant du fait que la première pièce menée de crabot peut porter des formes d'une deuxième pièce d'entrainement, en plus de ses formes de pièce menée de crabot, et donc avoir en plus une forme de porte-satellites (équipé de ses satellites) ou de pignon solaire, à utiliser en substitution quand les opérateurs souhaitent procéder à l'inversion.

La substitution mène à un changement de rapport de vitesses, ce qui est très avantageux : il suffit d'ouvrir la machine, de permuter les pièces sans en apporter d'autres, et de refermer, et une nouvelle démultiplication est obtenue.

Selon des caractéristiques optionnelles et avantageuses :
- la première entrée et la couronne dentée de la pièce menée sont couplées par un ou plusieurs pignons satellites étagés fixés au carter et un pignon solaire couplé à la première entrée
- ou alternativement, dans un autre mode de réalisation, la première entrée et la couronne dentée de la pièce menée sont couplées par un porte-satellites couplé à la première entrée et portant un ou plusieurs pignons satellites engrenant une couronne dentée du carter ;
- le mécanisme d'actionnement peut comprendre une vis sans fin dans un carter, et une commande manuelle, accessible pour un opérateur à une extrémité de la vis sans fin opposée au moteur, agissant sur le mécanisme de débrayage pour découpler le mécanisme d'actionnement et le moteur rotatif par l'action de la tige, la tige étant insérée dans un alésage central de la vis sans fin ;
- une lame ressort peut être positionnée un carter du moteur pour maintenir la pièce meneuse à distance de la pièce menée quand le moteur est immobile, un ressort de compression appuyé sur le moteur rappelant la pièce meneuse contre la pièce menée et des dents de la pièce meneuse permettant d'écarter la lame ressort sous l'effet du ressort de compression et de la rotation du moteur quand celui-ci est démarré ; Alternativement à la lame ressort, un levier pivotant peut être utilisé pour cette fonction ;
- la pièce menée, la pièce meneuse et l'empreinte de pièce menée peuvent comprendre deux tenons, ou trois tenons, éventuellement avec un étage de trois demi-tenons (tenons moins élevés que les tenons complets). En particulier, la pièce meneuse comprend six tenons (dont trois demi-tenons et trois tenons complets) et l'empreinte de pièce meneuse comprend trois empreintes de tenons ;
- la pièce menée et la pièce meneuse sont en métal fritté ; C'est une méthode efficace pour obtenir une pièce qui ait d'un côté une forme de crabot, et de l'autre une forme de pignon ;
- l'actionneur manuel en rotation peut être un volant, une commande du système de transmission permettant un découplage dudit volant avec la première entrée de puissance par la tige qui est poussée par le moyeu quand le crabot est fermé.

L'invention va maintenant être discutée en relation avec les figures présentées à titre illustratif.
La figure 1 représente un servomoteur incorporant l'invention.
La figure 2 représente en coupe le réducteur modulaire dans une configuration particulière (définissant un rapport de vitesses particulier), le moteur étant par ailleurs couplé à la vis sans fin, c'est-à-dire que le réducteur est en position fermé (P1).
La figure 3 représente en vue de trois-quarts un mode d'utilisation d'un servomoteur sans le réducteur modulaire.
La figure 4 représente une vue de trois-quarts du réducteur modulaire dans une configuration donnée, d'autres configurations étant par ailleurs accessibles.
La figure 5 représente une autre vue de trois-quarts du réducteur modulaire.
La figure 6 représente la même vue de trois-quarts du réducteur modulaire mais dans une autre configuration de celui-ci (les pignons ont été démontés et remontés différemment).
La figure 7 représente la configuration de la figure 6 mais dans une vue en coupe.
La figure 8 représente une autre configuration du réducteur modulaire en vue de trois-quarts (similaire à la configuration de la figure 4).
La figure 9 représente en vue de trois-quarts la configuration des figures 6 et 7.
La figure 10 représente une autre mise en œuvre du réducteur modulaire, avec un troisième pignon solaire.
La figure 11 représente une dernière mise en œuvre du réducteur modulaire, sans réduction.
La figure 12 présente un exemplaire de pignon solaire d'un mode de réalisation de l'invention, vu en détail.
La figure 13 présente en détail une pièce déjà aperçue en figure 2, qui est un baladeur (demi-crabot).
La figure 14 présente le réducteur en position avec crabot ouvert, et commande manuelle engagée, le moteur étant découplé de la vis sans fin. Il s'agit d'une deuxième position (P2) du système déjà présenté dans une première position en figure 2.
La figure 15 présente un autre mode de réalisation de la partie réducteur de l'invention.

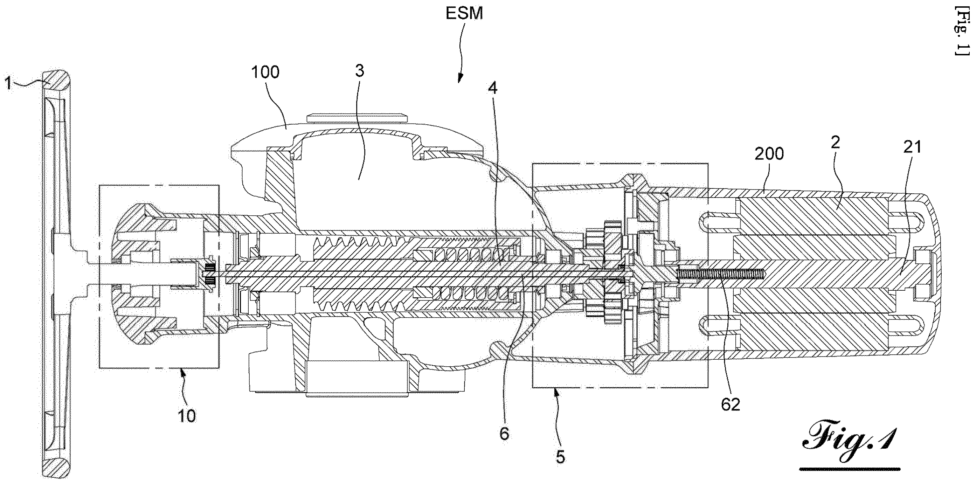

[Fig. 1] En figure 1 on a représenté une vue générale d'un ensemble servomoteur ESM selon l'invention, protégé par et inséré dans un carter principal 100 - l'ensemble servomoteur ESM comprenant notamment une vis sans fin centrale dans le mécanisme et placée dans ce carter principal 100 - et un deuxième carter, le carter du moteur 200, sur la droite de la figure.

L'ensemble servomoteur ESM comprend un volant 1, un moteur électrique 2 dont le rotor est référencé 21, un ensemble vis sans fin et roue associée, duquel on voit la roue 3 (en arrière sur la vue) et la vis sans fin 4 (dans le plan de la figure), dont les extrémités respectives sont en fonction des circonstances couplées l'une, l'extrémité gauche sur la figure, au volant 1, occasionnellement et l'autre, l'extrémité droite sur la figure, au moteur 2, dans la plus grande part des situations de vie du servomoteur ESM.

L'ensemble servomoteur ESM comprend aussi un système de débrayage 5 entre le moteur 2 et la vis sans fin 4 et un ensemble mécanique de réduction et commande dit commande manuelle 10, placé entre le volant 1 et la vis sans fin, poussant sous l'action d'un opérateur humain agissant lui-même par poussée sur le volant 1 dans la direction du moteur 2 un actionneur de débrayage traversant 6.

L'actionneur de débrayage traversant 6 a la structure d'une tige en translation insérée et se déplaçant dans un alésage longitudinal de la vis sans fin 4, à l'extrémité duquel elle est placée pour ouvrir le système de débrayage 5 quand l'opérateur humain pousse sur le volant 1 pour engager l'actionnement manuel par le volant, qui est beaucoup plus aisé à mener si le moteur 2 est découplé de la vis sans fin 4.

La roue 3 est mise en place sur un arbre du servomoteur qui est couplé avec l'arbre d'une vanne ou ventelle industrielle (non représenté). En fonction de l'orientation de l'arbre de la vanne ou ventelle, l'orientation de l'ensemble servomoteur ESM, vu comme l'axe commun au moteur électrique 2 et au volant 1 ainsi qu'à la vis sans fin 4 peut être soit horizontale soit verticale.

Comme mentionné, le volant 1 et le moteur électrique 2 sont placés coaxialement avec la vis sans fin 4 et couplés ou couplables avec respectivement l'une et l'autre de ses deux extrémités. Le système de débrayage 5 est en mesure de découpler le moteur électrique 2 de la première extrémité (à droite sur la figure) de la vis sans fin 4 ou de les coupler et la commande manuelle 10 est en mesure d'effectuer un changement de rapport de vitesses entre le volant 1 et la vis sans fin 4 ou alors de découpler ces deux éléments, et de manière réversible les coupler à nouveau, du côté de la deuxième extrémité de la vis sans fin (à gauche sur la figure).

L'actionneur traversant 6 est un système purement mécanique, dans le mode de réalisation présenté, configuré pour transmettre un changement de configuration depuis le système de débrayage 5 à la commande manuelle 10 ou inversement de la commande manuelle 10 au système de débrayage 5. L'actionneur traversant ne transmet pas de puissance mécanique, mais il permet le basculement d'une configuration du système de débrayage 5 vers une autre ou d'une configuration de la commande manuelle 10 vers une autre, respectivement sous la commande d'un signal (une poussée) venant de l'autre extrémité de la vis sans fin 4. L'actionneur traversant 6 est notamment construit sur la base d'une tige d'actionnement introduite dans un alésage traversant de la vis sans fin 4. La tige d'actionnement débouche aux deux extrémités de la vis sans fin 4 et elle transmet, par sa translation axiale (c'est à dire longitudinale) vers la gauche ou sa translation axiale vers la droite, une commande (une poussée) qui provoque une commutation à l'une ou l'autre des extrémités de la vis sans fin 4.

On précise à ce sujet maintenant le basculement opéré par l'actionneur traversant 6.

Quand le moteur électrique 2, initialement à l'arrêt et découplé de la vis sans fin 4 entre en mouvement sous l'action d'une commande du moteur, souvent reçu par un moyen de communication à distance, le moteur électrique 2 est couplé à la vis sans fin 4 par le système de débrayage 5 et un ressort de connexion du moteur 62. Le ressort de connexion du moteur 62 permet de dégager un élément de blocage (une lame ressort qui sera présentée plus loin), pour que le couplage se produise, du fait du début de la rotation. Le ressort pousse la tige d'actionnement de l'actionneur traversant 6 vers le module de transmission de puissance 10, et provoque, par l'intermédiaire de l'extrémité de cette tige le découplage du volant 1 de la vis sans fin 4. Ainsi, quand le moteur tourne, le volant est déconnecté, ce qui est utile pour éviter de blesser un opérateur qui serait à proximité du volant.

A l'inverse, quand le volant 1 est poussé par un opérateur pour enfoncer son axe vers la vis sans fin 4, le moteur électrique 2 est découplé de la vis sans fin 4 par le système de débrayage 5 car celui-ci est ouvert par l'extrémité de la tige d'actionnement, dont le déplacement est causé par une poussée menée par l'axe du volant 1. Simultanément, la vis sans fin 4 est couplée au volant. Ainsi, si l'opérateur veut utiliser le volant, il peut le faire sans avoir à faire tourner le moteur, ce qui est difficile du fait des frottements.

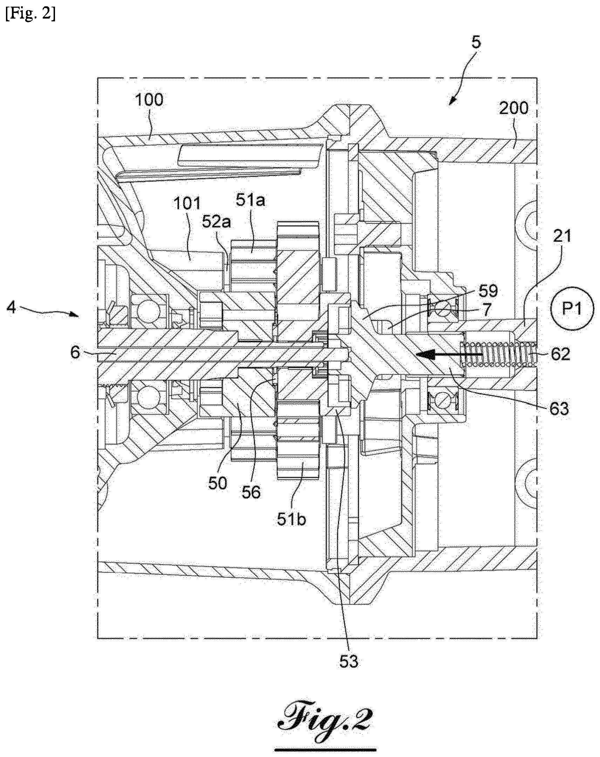

[Fig. 2] En figure 2 on a représenté les éléments de détail du système de débrayage 5. Sur la gauche de la figure se trouve l'actionneur traversant 6 avec la tige d'actionnement mobile en translation longitudinale de la gauche vers la droite et de la droite vers la gauche. A l'opposé de la tige d'actionnement se trouve le ressort de connexion du moteur 62 qui appuie sur un arbre coulissant 63. L'arbre coulissant 63 coulisse dans un alésage borgne du rotor du moteur électrique 21, au fond duquel est placé le ressort de connexion du moteur 62. L'arbre coulissant 63 dispose à son extrémité opposée au ressort de connexion du moteur 62 d'une forme de réception de l'extrémité de la tige d'actionnement. Ainsi quand la tige d'actionnement est déplacée vers la droite elle pousse l'arbre coulissant 63 vers la droite, et celui-ci comprime le ressort de connexion moteur 62. A l'inverse quand l'arbre coulissant 63 est se déplace vers la gauche, le ressort de connexion moteur 62 est décomprimé (c'est en général d'ailleurs ce qui amène l'arbre à se déplacer vers la gauche) et la tige d'actionnement se déplace vers la gauche, par poussée de l'arbre coulissant 63.

Le système de débrayage 5 comprend également un baladeur 59 monté sur l'arbre 63, et qui peut porter la forme de réception de l'extrémité de la tige d'actionnement. La tige d'actionnement pousse le baladeur 59 en direction du moteur électrique, et entraîne la compression du ressort de connexion au moteur 62 par le baladeur 59.

Différentes manières d'agencer ces différents éléments existent, et l'invention n'est pas limitée à l'une d'elles. Sur la figure, le baladeur 59 et l'arbre 63 sont une pièce unique. Le baladeur en tout état de cause constitue une pièce meneuse de crabot, et porte en son milieu, c'est-à-dire dans son moyeu, un espace par lequel la tige d'actionnement peut ouvrir le crabot, en écartant la pièce meneuse de la pièce menée. Le moyeu peut être l'arbre 63.

Quand le ressort de connexion au moteur 62 se libère il pousse le baladeur 59 vers la direction opposée au moteur électrique, ce qui a pour conséquence de déplacer la tige d'actionnement vers la gauche, c'est-à-dire vers le volant.

La tige de l'actionneur de débrayage traversant 6 traverse deux pignons solaires placés coaxialement l'un à l'autre et comprenant un alésage central traversant chacun. Compte tenu de leurs positions vis-à-vis du moteur, ils sont appelés par la suite pignon d'entrée et pignon de sortie, car ils sont l'entrée et la sortie d'un réducteur constitué de plusieurs pignons. Le pignon de sortie est référencé 50 et le pignon d'entrée est référencé 53. Le réducteur est modulaire, à savoir que les pignons peuvent être déplacés ou remplacés ou échangés, pour obtenir un rapport de réduction à façon.

Le réducteur modulaire transmet, quand le crabot est fermé, le couple du moteur électrique, à droite de la figure vers la vis sans fin actionnant la roue puis l'arbre du servomoteur, l'arbre de la vanne et la vanne, et le couple est d'abord appliqué au pignon d'entrée 53, avant de parvenir au pignon de sortie 50.

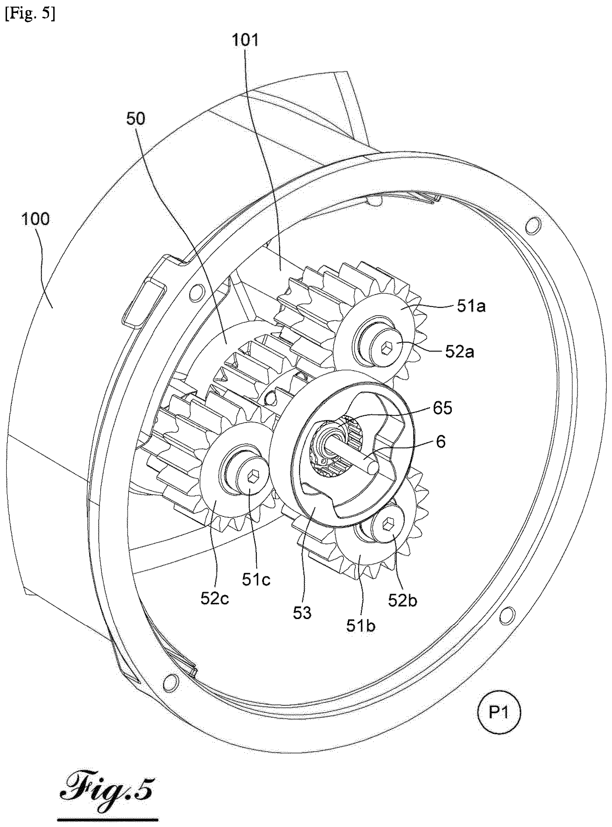

La transmission du couple se fait entre le pignon d'entrée 53 et le pignon de sortie 50 par l'intermédiaire, dans la conformation représentée en figure 2 du réducteur modulaire, de satellites 51a et 51b, un troisième satellite 51c n'étant pas visible sur la figure, ces trois satellites étant étagés, de manière à engrener avec l'un et l'autre des deux pignons solaires, dont les couronnes dentées ont des diamètres différents. Ces trois satellites sont placés autour du pignon d'entrée 53 et du pignon de sortie 50 selon une disposition régulière en triangle équilatéral. Les trois pignons satellites 51a à 51c sont chacun fixés au carter principal 100 par des vis 52a à 52c (visibles en figure 5) traversant un pignon satellite respectif et le fixant à un bossage 101 du carter. Il existe trois bossages 101 sur le carter, pour fixer les trois pignons satellites. Les vis de fixation sont parallèles à l'axe de la vis sans fin, et constituent l'axe de rotation des pignons satellites, parallèlement à l'axe de rotation des pignons d'entrée et de sortie, qui sont, comme déjà mentionné, des pignons solaires.

Le pignon d'entrée 53 et le pignon de sortie 50 s'appuient l'un sur l'autre longitudinalement par l'intermédiaire d'une butée à aiguilles 56. Cette butée à aiguilles 56 a un rôle de reprise d'effort axial. Elle est mise en place entre une face transversale de l'un des deux pignons et une face transversale de l'autre des deux pignons.

Le couple est transmis du moteur électrique par l'intermédiaire du rotor 21 à l'arbre 63, au baladeur 59 puis au pignon d'entrée 53. En effet, le baladeur 59 est, dans la position P1 représentée à la figure 2, craboté au pignon d'entrée 53, qui possède une forme de crabot (il s'agit de la pièce menée) sur une de ses faces transversales, complémentaire de la forme de crabot portée par la face transversale du baladeur (il s'agit de la pièce menante). Puis le couple est transmis du pignon d'entrée 53 à une première section des pignons satellites qui engrènent tous les trois avec lui, puis des pignons satellites, par une deuxième section des pignons satellites, vers le pignon de sortie 50 qui engrène les trois pignons satellites. Cet engrènement a été rendu possible, naturellement, par un choix spécifique du diamètre des deux sections de pignons satellites, compatibles avec les diamètres des deux pignons planétaires.

Le long de l'axe, le pignon solaire de sortie 50 comporte une section qui porte la forme de pièce menée de crabot (qui n'est pas utilisée tant que le pignon reste en position de sortie) et une section qui porte des dents de pignons en périphérie (une couronne dentée) pour engrener avec les satellites. Il porte aussi, en son centre, des formes pour son encastrement sur l'extrémité de la vis sans fin, en l'occurrence des cannelures sur la surface d'un alésage traversant qui est engagé sur l'extrémité de la vis sans fin, qui constitue un arbre cannelé complémentaire.

Le long de l'axe, le pignon solaire d'entrée 53 comporte une section qui porte des dents de pignons en périphérie (une couronne dentée) pour engrener avec les satellites et une section qui porte la forme de pièce menée de crabot. Il porte aussi, en son centre, des formes pour son encastrement éventuel sur l'extrémité de la vis sans fin, en l'occurrence des cannelures sur la surface d'un alésage traversant qui pourrait être engagé sur l'extrémité de la vis sans fin, dans l'hypothèse d'une reconfiguration du réducteur, avec inversion du pignon solaire de sortie 50 et du pignon solaire d'entrée 53.

Il ressort de ces descriptions des deux pignons, qu'ils peuvent être inversés : le pignon de sortie peut être placé en entrée, auquel cas sa forme de pièce menée de crabot va être utilisée, mais son alésage cannelé ne le sera pas, et inversement, le pignon d'entrée peut être placé en sortie, auquel cas sa forme de pièce menée de crabot ne sera pas utilisée, et son alésage cannelé le sera. Pour assurer la continuité de la transmission de puissance, les pignons satellite sont retournés, et vissés de la même manière qu'auparavant.

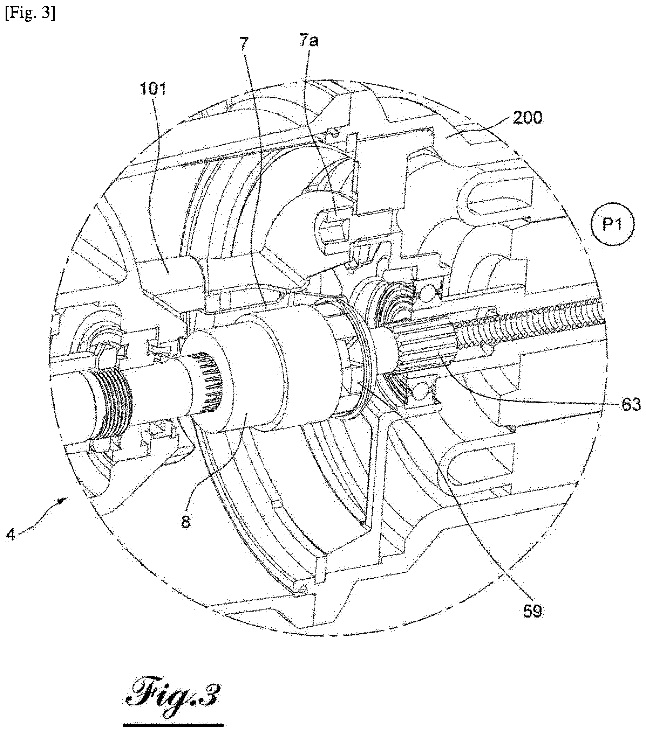

[Fig. 3] En figure 3 on a représenté le système de la figure 2, sans réduction entre le moteur électrique et la vis sans fin. Ainsi, sont visibles sur la gauche de la figure, près de l'actionneur traversant 6, un bossage de fixation 101 qui n'est pas utilisé, car les pignons satellites n'ont pas été introduits.

Sur la partie droite de la figure sont visibles l'arbre 63 et le baladeur 59, qui est craboté à une rallonge 8 couplée par des cannelures à la vis sans fin 4. En effet, la vis sans fin porte des cannelures sur la circonférence de son extrémité, et la rallonge 8 comprend un alésage cannelé complémentaire de ces cannelures.

La figure permet également de voir la lame ressort 7 qui est vissée par des vis 7a au carter du moteur électrique 200, et assure un rôle de verrouillage du crabot en position ouverte, moteur éteint, comme cela sera commenté plus loin.

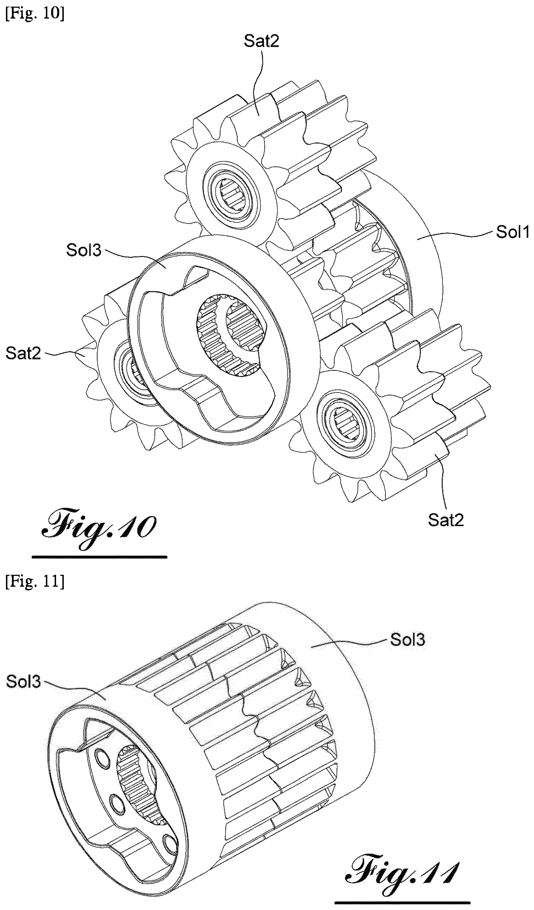

Alternativement, dans une variante non représentée, le pignon de sortie 50 visualisé en figure 2 est conservé et directement couplé en rotation, dans cette configuration, avec le pignon d'entrée 53 également conservé, par un moyen de couplage placé sur l'axe de rotation et encastré avec l'un et avec l'autre, les pignons satellites étant supprimés. Ces notions sont revues plus loin en figure 11.

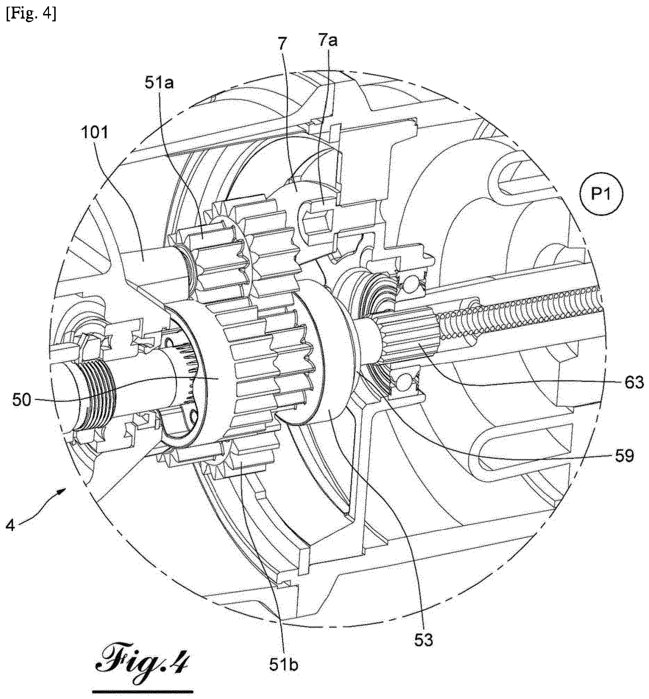

[Fig. 4] En figure 4 on retrouve sous le même angle qu'en figure 3 le réducteur modulaire, avec cette fois-ci les pignons satellites 51a, 51b et 51c transmettant le couple du pignon d'entrée 53 au pignon de sortie 50, le pignon de sortie étant couplé par des cannelures à la vis sans fin. En effet, le pignon de sortie 50 comporte un alésage cannelé qui est engagé sur le cylindre cannelé extérieur de la vis sans fin. Le pignon de sortie 50 n'est pas directement couplé en rotation, dans cette configuration, avec le pignon d'entrée 53, car on a supprimé le moyen de couplage placé précédemment sur l'axe de rotation.

Sur cette vue le baladeur 59 est craboté au pignon d'entrée 53, ce qui définit la position P1 du système d'embrayage du moteur électrique : le moteur électrique est couplé à la vis sans fin.

On voit sur cette figure que le diamètre extérieur de la section des satellites 51a à 51c qui engrènent avec le pignon de sortie 50 est plus faible que le diamètre de la section des satellites qui engrènent avec le pignon d'entrée 53. Le diamètre du pignon de sortie est plus grand que le diamètre de pignon d'entrée. Il s'agit de la configuration que l'on a déjà observé en figure 2. Elle définit un rapport de réduction donné entre le moteur électrique et la vis sans fin. En fonction de la vanne ou ventelle à commander, il est nécessaire de modifier ce rapport.

[Fig. 5] La figure 5 représente le réducteur modulaire du système de débrayage 5 dans une vue de trois-quarts sous un autre angle, depuis l'espace du moteur, et en regardant dans le carter principal 100 (le carter de la vis sans fin). Et cette fois ci le baladeur n'est pas représenté, pour éviter de surcharger l'image, ce qui permet de visualiser l'intérieur du pignon d'entrée 53, qui porte une forme de pièce menée de crabot. On voit aussi l'alésage cannelé du pignon d'entrée, qui n'est utilisé qu'en cas de réorganisation des pignons, si le pignon en question est placé en sortie. On voit aussi l'extrémité de la tige d'actionnement qui dépasse du centre du pignon d'entrée 53, et qui est maintenue par un circlip de maintien axial 65. La tige d'actionnement de l'actionneur de débrayage traversant 6 traverse le pignon d'entrée et le pignon de sortie, par leurs alésages, jusqu'à parvenir au contact de la pièce meneuse du crabot (non représentée sur la figure), qui porte une surface pour être poussée par la tige.

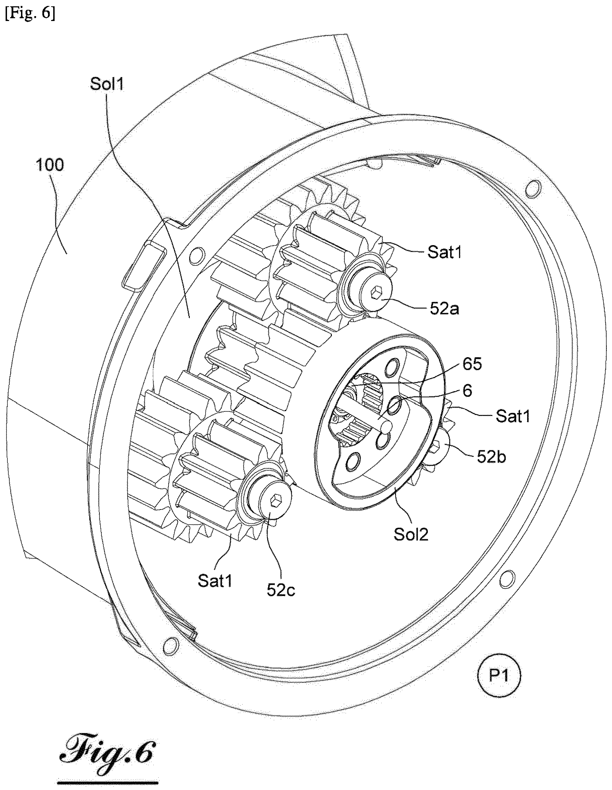

[Fig. 6] La figure 6 est une vue similaire à la vue de la figure 5, avec néanmoins une forme de crabotage du pignon d'entrée 53 (la pièce menée) différente. En effet, il n'y a pas trois tenons et trois mortaises dans la forme de crabotage (comme dans le mode de réalisation de la figure 5) mais seulement deux tenons et deux mortaises, cette caractéristique n'étant pas essentielle pour la mise en œuvre de l'invention. De plus, et indépendamment de cette différence le jeu de pignons n'est pas le même. Les pignons satellites Sat1 sont des pignons étagés ayant deux couronnes dentées disposées successivement sur leur axe, dont l'une avec un grand diamètre engrenant avec le pignon (solaire) Sol1 (placé en sortie), et un petit diamètre engrenant avec le pignon solaire Sol2 (pignon placé en entrée), alors que c'était l'inverse dans le montage de la figure 5. Les diamètres des roues dentées des pignons d'entrée et de sortie sont adaptés bien sûr pour engrener avec les sections correspondantes des satellites : la couronne dentée de Sol2 est plus grande que la couronne dentée de Sol1, alors que c'était l'inverse en figure 5.

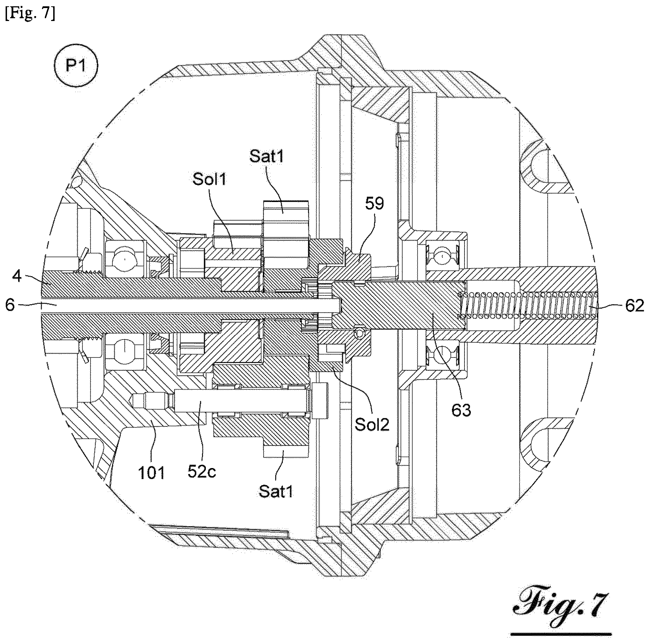

[Fig. 7] La figure 7 représente le montage de la figure 6 en vue de section. Il apparait notamment que le diamètre engrenant du pignon Sol1 est plus petit que le diamètre engainant du pignon Sol2, comme cela vient d'être dit.

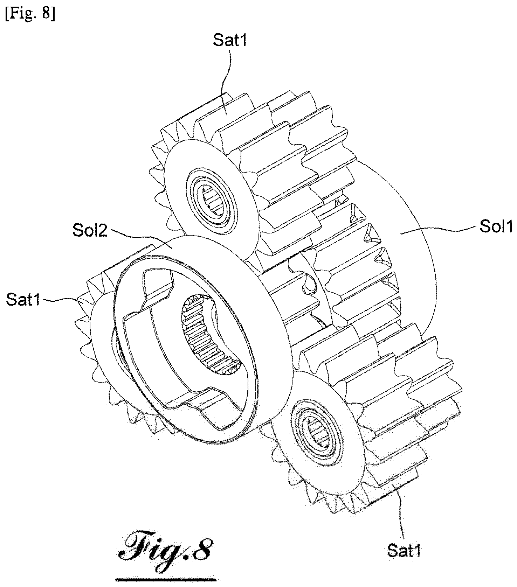

[Fig. 8] On visualise également ce montage en figure 8, qui est une vue de trois-quarts où seuls les pignons sont représentés (une forme de crabot avec trois tenons et trois mortaises est représentée, ce point étant indépendant des autres caractéristiques).

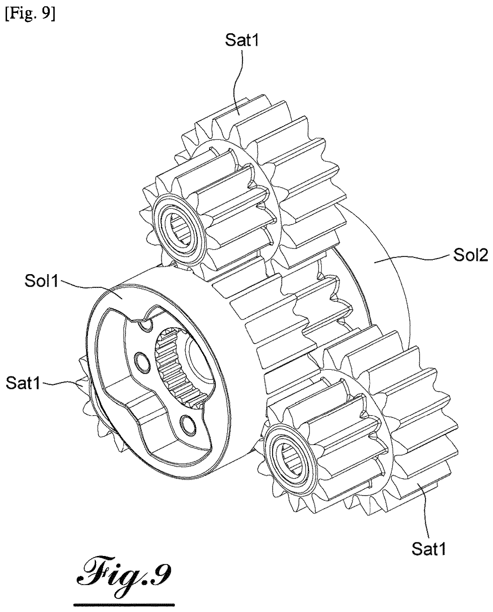

[Fig. 9] La figure 9 montre quant à elle les mêmes pièces mais cette fois ci inversées avec le pignon Sol1 placé en entrée et le pignon Sol2 placé en sortie. Les satellites Sat1 sont conservés mais montés en sens inverse. Le rapport de vitesses est l'inverse du rapport de vitesses obtenu avec le précédent montage.

Les formes de crabotage de Sol1 et Sol2 sont identiques, de manière à ce que l'un ou l'autre puisse être utilisé en coopération avec le baladeur dont on a dit qu'il formait l'autre partie du crabot, c'est-à-dire la pièce meneuse. Comme précédemment, la forme de crabot est entourée d'une circonférence dont le diamètre externe est dépourvu de dents, et qui a le même diamètre externe que le haut des dents, ce qui permet d'offrir une butée longitudinale aux dents des satellites.

[Fig. 10] La figure 10 montre sous le même angle que les figures 8 et 9 un montage avec le pignon Sol1, un nouveau pignon Sol3 et des satellites différents des précédents, référencés Sat2. Ce montage permet l'obtention d'un rapport de réduction différent des deux précédents montages, dans le contexte de la modularité du réducteur.

[Fig. 11] La figure 11 montre quant à elle un montage sans satellites avec une transmission directe entre deux exemplaires du pignon Sol 3 qui sont reliés l'un à l'autre par une clavette centrale (non visible). Ainsi dans cette configuration les roues dentées de ces deux pignons ne servent pas, le couple est par contre transmis par la clavette qui s'insère dans les alésages internes cannelés de ces deux exemplaires du pignon Sol 3. On obtient une fonctionnalité similaire à celle de la figure 3.

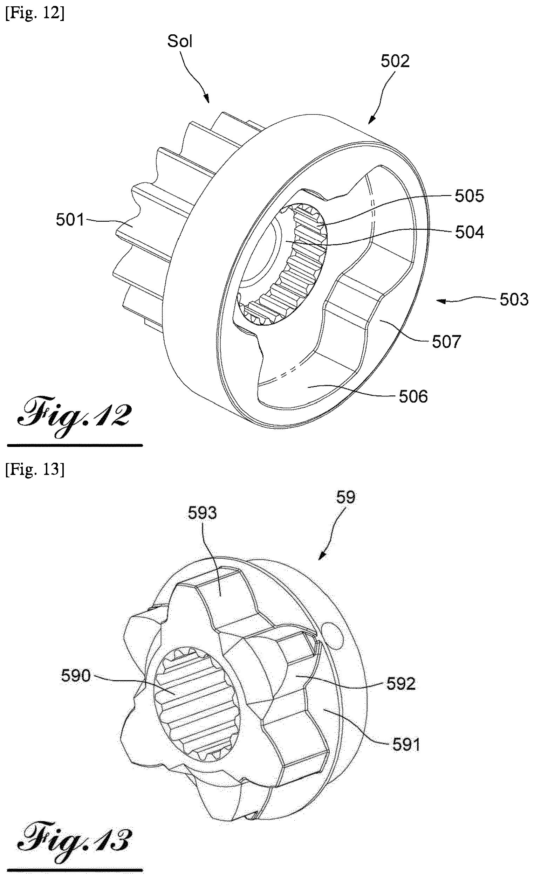

[Fig. 12] En figure 12 on a représenté la structure d'un pignon solaire Sol qui peut être mis en place soit en face du baladeur pour engager celui-ci par crabotage et coupler le moteur à la vis sans fin de manière réversible en servant de pignon d'entrée au réducteur, soit par engagement de cannelures 505 sur la vis sans fin, de manière à servir de pignon de sortie du réducteur. Le pignon solaire Sol comprend, extérieurement, deux sections le long de l'axe : une section avec des dents 501 formant la couronne, et une section d'extérieur lisse, qualifiée ici de section de crabotage 502. La section de crabotage 502 comprend une cavité 503 ouverte pour un accès par une translation longitudinale, les parois latérales délimitant la cavité 503 étant parallèles à l'axe longitudinal du pignon solaire Sol pour permettre l'engagement de la pièce meneuse. Il s'agit ainsi d'une partie femelle de crabot, cette partie femelle étant à étage unique. Par ailleurs, la cavité 503 comporte un fond qui est une paroi plane 504 perpendiculaire à l'axe longitudinal du pignon. Au centre de cette paroi plane 504 un large alésage cylindrique à géométrie générale de révolution et cannelé 505 est présent dans le pignon solaire Sol. Cet alésage cannelé 505 a lui-même un fond qui est percé en son centre d'un alésage de diamètre plus faible traversant la roue dentée 501 jusqu'à sa face opposée à la cavité 503, et débouchant au centre des dents 501. Cet alésage traversant le plus étroit sert au passage de la tige d'actionnement. Les cannelures sur l'alésage plus large servent à l'engagement de cannelures complémentaires sur la vis sans fin, dans les configurations de montage où ce pignon ne sert pas au crabotage, mais sert de pignon de sortie du réducteur.

La cavité 503 est constituée de trois mortaises 506 séparées par de larges tenons 507, mais une autre configuration est possible, pour constituer la pièce menée de crabot.

[Fig. 13] On décrit maintenant en relation avec la figure 13 la structure du baladeur 59, qui est une pièce meneuse de crabot. Le baladeur 59 comprend, le long de l'axe longitudinal, une section de diamètre large, à l'arrière sur la figure et une section plus étroite aux formes complexes, à l'avant sur la figure.

Dépassent d'une surface plane 591 orthogonale à l'axe longitudinal, cette surface constituant un épaulement de la section large arrière, des tenons de hauteur intermédiaire 592 et des tenons de hauteur supérieure 593. Les tenons sont disposés régulièrement autour de l'axe longitudinal du baladeur 59, avec alternance des tenons de hauteur intermédiaire 592 et des tenons de hauteur supérieure 593. Les tenons de hauteur intermédiaire sont au nombre de trois et les tenons de hauteur supérieure également. La partie male de crabot, ou pièce meneuse, est ainsi à double étage.

Le baladeur 59 comprend un alésage traversant cannelé 590. Il est utilisé pour engager l'arbre coulissant 63, qui porte sur sa surface extérieure des cannelures complémentaires. Une autre solution peut néanmoins être mise en œuvre, ce point n'étant pas essentiel. La tige d'actionnement est en mesure de pousse le baladeur 59 en s'appuyant en son centre, soit parce que l'arbre coulissant constitue un appui pour le baladeur (par exemple du fait d'un clavetage), soit parce que le baladeur et l'arbre sont d'un seul tenant comme représenté en figure 2.

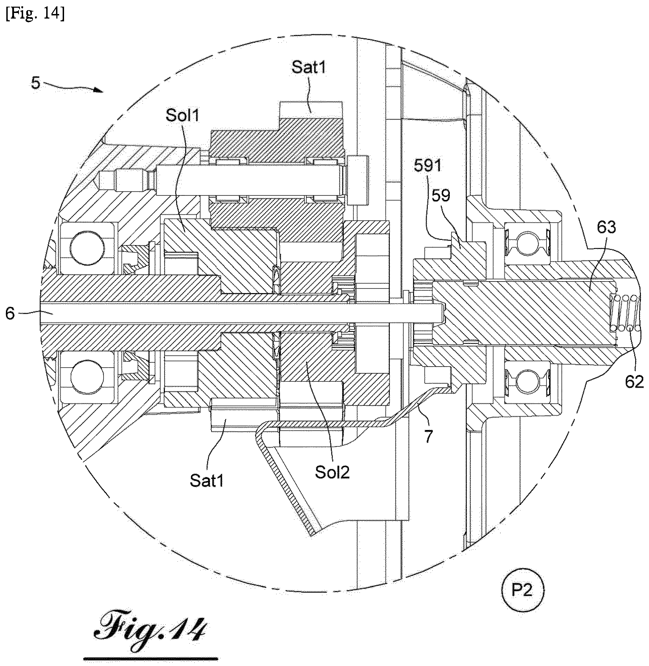

[Fig. 14] La figure 14 montre la deuxième position P2 du système de débrayage 5. La tige d'actionnement a progressé vers la droite et son extrémité est plus introduite que précédemment vers l'arbre 63. La progression de la tige d'actionnement s'est accompagnée d'une translation du baladeur 59 dans la direction du moteur électrique, et la compression du ressort de connexion au moteur 62. Qui plus est la lame ressort 7 a, le temps de la translation du baladeur 59, été écartée vers l'extérieur, radialement, par la section arrière de celui-ci qui a une circonférence essentiellement conique suivie par un épaulement, et la lame ressort ayant d'abord été tendue, puis ayant passé l'épaulement et s'étend détendue, s'appuie à l'issue de ce mouvement sur l'épaulement ce qui empêche un retour en arrière du baladeur 59 malgré la pression appliquée sur celui-ci par le ressort de connexion du moteur 62. Ainsi, même si l'appui sur la tige d'actionnement est relâché, le baladeur 59 reste dans la position visible à la figure.

Le baladeur 59 n'est plus couplé au solaire Sol2, car celui-ci n'a pas suivi le mouvement de translation (il s'agit d'une ouverture de crabot), et est donc maintenant écarté du baladeur 59. En effet, la tige d'actionnement est en translation sans frottement dans les alésages du pignon d'entrée et du pignon de sortie du réducteur.

Si le moteur électrique se met en rotation, sous l'effet d'une commande électrique qui lui est envoyée, la rotation de l'arbre 63 induit la rotation des tenons portés par le baladeur 59, qui poussent la lame ressort 7 de côté, amenant celle-ci à se tendre et à quitter l'épaulement du baladeur 59, libérant celui-ci en translation selon l'axe. Le baladeur 59 poussé par le ressort de connexion du moteur 62, va se rapprocher du solaire Sol2 et retrouver son engagement avec la forme de crabot de celui-ci, couplant ainsi le moteur à nouveau avec la vis sans fin.

En faisant ce trajet vers la gauche, le baladeur 59 pousse la tige d'actionnement également vers la gauche de telle sorte qu'elle soit moins enfoncée vers l'arbre 63. La tige d'actionnement progresse donc dans la commande manuelle à l'extrémité opposée de la vis sans fin, et en fonction du montage de celle-ci peut notamment découpler le volant de l'extrémité de la vis sans fin, pour éviter que le moteur ne fasse tourner le volant, ce qui est dangereux pour les opérateurs.

Et le baladeur 59 laisse se détendre la lame ressort 7 qui trouve de l'espace vers l'axe longitudinal au fur et à mesure qu'il se déplace vers la gauche, une fois l'épaulement passé. Cela est visible en figure 3.

L'engagement du baladeur 59 avec le solaire Sol2 se fait par l'introduction des tenons du baladeur dans les mortaises du pignon solaire Sol2.

Grâce au système de crabotage à deux étages, il n'y a pas de choc lors du changement de sens de rotation du moteur et il n'y a pas de jeu quand le système est totalement engagé.

On précise que les cannelures de l'alésage des solaires ne sont utilisées que quand le solaire concerné est placé en sortie du réducteur, monté sur la vis sans fin. A l'inverse quand le pignon solaire fait face au baladeur 59, l'alésage cannelé n'est pas utilisé.

Grâce à l'utilisation de pignons réversibles et grâce à la possibilité de mettre en place différents types de pignons, le réducteur modulaire permet la mise en place facilité de différents rapports de vitesses entre le moteur électrique et la vis sans fin, en fonction de la vanne qui doit être équipée.

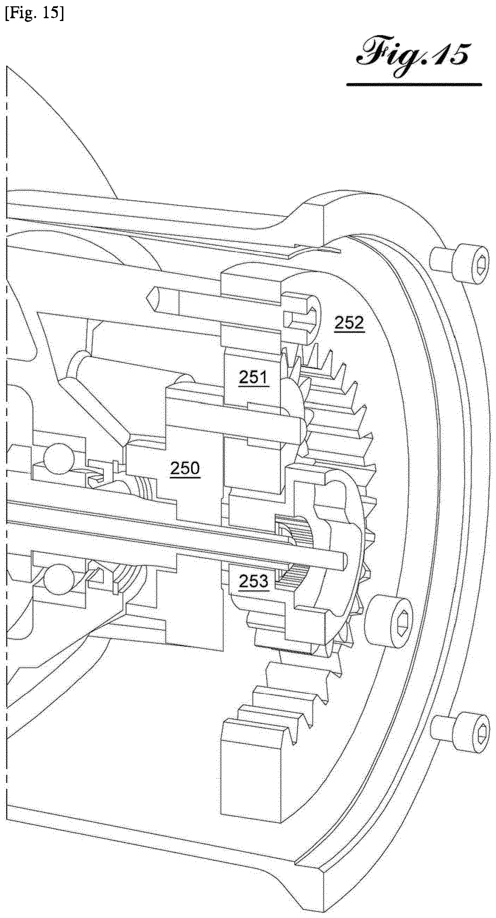

[Fig.15] La figure 15 présente un deuxième mode de réalisation du réducteur. Les éléments connus ne sont pas commentés, ni numérotés, pour alléger le texte et le dessin.

Au lieu de de transmettre le couple du moteur à la vis sans fin par des pignons étagés, chacun ayant un axe fixé au carter et engrenant par un étage sur la pièce menée de crabot et par un autre étage un pignon solaire de la vis sans fin, ce pignon solaire est remplacé par un porte-satellites 250 et ce porte-satellites a des satellites 251 qui engrènent sur une couronne 252 fixée au carter, ainsi que sur la pièce menée de crabot.

Le porte-satellites porte une forme de pièce menée de crabot, non utilisée dans la configuration de la figure, mais qui peut être utilisée en permutant sa position avec celle de la pièce menée de crabot 253 placée en face de la pièce meneuse de crabot (non représentée) dans la configuration de la figure. Cette permutation, basée sur la présence d'alésages cannelés identiques en position axiale sur les pièces 253 et 250, et sur la présence également de forme menée de crabot identiques sur les deux pièces, permet de profiter de deux rapports de vitesses différents : les satellites sont placés à nouveau, par un arrangement longitudinal, à engrener avec la couronne, même s'ils sont montés sur un porte-satellites qui regarde dans la direction opposée dans la nouvelle configuration.

### ESM ensemble servomoteur

1 volant
2 moteur électrique
21 rotor du moteur électrique
3 roue
4 vis sans fin
5 système de débrayage
6 actionneur de débrayage traversant
50 pignon de sortie
Sol1, Sol2, Sol3, Sol pignons solaires
501 roue dentée
502 section de crabotage
503 cavité
504 paroi plane
505 alésage cannelé
506 mortaise
51a, 51b, 51c, Sat1, Sat2 pignons satellites étagés (à deux étages)
52a, 52b, 52c vis
53 pignon d'entrée
56 butée à aiguille
59 baladeur
590 alésage cannelé
591 surface plane
592 tenons de hauteur intermédiaire
593 tenons de hauteur supérieure
62 ressort de connexion du moteur
63 arbre coulissant
65 circlip
7 lame ressort
7a vis de fixation de la lame
8 rallonge
10 commande manuelle
100 carter principal
101 bossage de fixation
200 carter du moteur
P1 première position du système d'embrayage du moteur électrique
P2 deuxième position du système d'embrayage du moteur électrique
250 porte-satellites
251 satellites
252 couronne

## Revendications

1. Système de transmission de puissance mécanique pour contrôler une vanne ou une ventelle, le système de transmission comprenant un mécanisme d'actionnement (3, 4) pour un arbre de la vanne ou de la ventelle, le mécanisme d'actionnement (3, 4) disposant d'une première et d'une deuxième entrées de puissance, le système comprenant un moteur rotatif (2) et un actionneur manuel en rotation (1) couplés respectivement à la première et la deuxième entrées de puissance, un mécanisme de débrayage (5) par tige exerçant une poussée pour débrayer ledit moteur (2) vis-à-vis de la première entrée de puissance, le mécanisme de débrayage (5) comprenant une pièce meneuse (59) et une première pièce menée (Sol1, Sol2, Sol3, 53) constituant ensemble un crabot sur un axe, le système de transmission étant **caractérisé en ce que** la pièce menée (Sol1, Sol2, Sol3, 53) possède une couronne dentée couplée à la première entrée de puissance, au moins un pignon satellite (51 ; 251) et un alésage central pour couplage avec la première entrée de puissance disposé au centre d'une première pièce d'entrainement (50; 250) qui de plus porte une empreinte de deuxième pièce menée de crabot, la première pièce menée portant des formes d'une deuxième pièce d'entraînement en plus de ses formes de pièce menée de crabot, ladite pièce menée (Sol1, Sol2, Sol3, 53) possédant aussi un alésage central (505), la tige, pour procéder à un débrayage, traversant les deux alésages centraux et poussant un moyeu de la pièce meneuse (59).

2. Système de transmission de puissance mécanique selon la revendication 1, **caractérisé en ce que** la première entrée et la couronne dentée de la pièce menée sont couplées par un ou plusieurs pignons satellites étagés (51a, 51b, 51c) fixes au carter et un pignon solaire couplé à la première entrée.

3. Système de transmission de puissance mécanique selon la revendication 1, **caractérisé en ce que** la première entrée et la couronne dentée de la pièce menée sont couplés par un porte-satellites (250) couplé à la première entrée et portant un ou plusieurs pignons satellites (251) engrenant une couronne dentée (252) du carter.

4. Système de transmission de puissance mécanique selon l'une des revendications 1 à 3, **caractérisé en ce que** le mécanisme d'actionnement (3, 4) comprend une vis sans fin (4) dans un carter, et une commande manuelle (10, 6), accessible pour un opérateur à une extrémité de la vis sans fin opposée au moteur, agissant sur le mécanisme de débrayage (5) pour découpler le mécanisme d'actionnement (3, 4) et le moteur rotatif (2) par l'action de la tige (6), laquelle tige (6) est insérée dans un alésage central de la vis sans fin (4).

5. Système de transmission de puissance mécanique selon l'une des revendications 1 à 4, **caractérisé en ce qu'**une lame ressort (7) ou un levier maintient la pièce meneuse (59) à distance de la pièce menée (53) quand le moteur est immobile, un ressort de compression (62) appuyé sur le moteur (2) rappelant la pièce meneuse (59) contre la pièce menée (53).

6. Système de transmission de puissance mécanique selon l'une des revendications 1 à 5, **caractérisé en ce que** la pièce meneuse (59) comprend six tenons et l'empreinte de pièce meneuse (59) comprend trois empreintes de tenons.

7. Système de transmission de puissance mécanique selon l'une des revendications 1 à 6, **caractérisé en ce que** la pièce menée (sol1, sol2, sol3, 53) et la pièce meneuse (59) sont en métal fritté.

8. Système de transmission de puissance mécanique selon l'une des revendications 1 à 7, **caractérisé en ce que** l'actionneur manuel en rotation (1) est un volant, une commande (10) du système de transmission permettant un découplage dudit volant avec la première entrée de puissance par la tige qui est poussée par le moyeu quand le crabot est fermé.

9. Système de transmission de puissance mécanique selon l'une des revendications 1 à 7, **caractérisé en ce que** l'alésage central pour couplage est un alésage cannelé.

## Patentansprüche

1. Mechanisches Leistungsübertragungssystem zum Steuern eines Ventils oder einer Klappe, das Leistungsübertragungssystem umfassend einen Betätigungsmechanismus (3, 4) für eine Welle des Ventils oder der Klappe umfasst, wobei der Betätigungsmechanismus (3, 4) über einen ersten und einen zweiten Leistungseingang verfügt, das System umfassend einen drehenden Motor (2) und einen manuellen Drehaktuator (1), die jeweils mit dem ersten und dem zweiten Leistungseingang gekoppelt sind, ein Ausrückmechanismus (5) durch eine Stange, die einen Druck ausübt, um den Motor (2) gegenüber dem ersten Leistungseingang auszurücken, der Ausrückmechanismus (5) umfassend ein Antriebsteil (59) und ein erstes angetriebenes Teil (Soll, Sol2, Sol3, 53), die zusammen eine Klauenkupplung auf einer Achse bilden, wobei das Leistungsübertragungssystem **dadurch gekennzeichnet ist, dass** das angetriebene Teil (Soll, Sol2, Sol3, 53) einen Zahnkranz besitzt, der mit dem ersten Leistungseingang gekoppelt ist, mindestens ein Planetenrad (51; 251) und eine zentrale Bohrung zum Koppeln mit dem ersten Leistungseingang, angeordnet in der Mitte eines ersten Antriebsteils (50; 250), das ferner eine Aussparung für ein zweites angetriebenes Teil der Klauenkupplung trägt, wobei das erste angetriebene Teil zusätzlich zu seinen Formen als angetriebenes Teil der Klauenkupplung auch Formen eines zweiten Antriebsteils trägt, wobei das angetriebene Teil (Soll, Sol2, Sol3, 53) auch eine mittlere Bohrung (505) besitzt, wobei die Stange zum Ausrücken durch beide mittleren Bohrungen hindurchführt und eine Nabe des Antriebsteils (59) schiebt.

2. Mechanisches Leistungsübertragungssystem nach Anspruch 1, **dadurch gekennzeichnet, dass** der erste Eingang und der Zahnkranz des angetriebenen Teils durch ein oder mehrere abgestufte, am Gehäuse befestigte Planetenräder (51a, 51b, 51c) und ein mit dem ersten Eingang gekoppeltes Sonnenrad gekoppelt sind.

3. Mechanisches Leistungsübertragungssystem nach Anspruch 1, **dadurch gekennzeichnet, dass** der erste Eingang und der Zahnkranz des angetriebenen Teil durch einen mit dem ersten Eingang gekoppelten Planetenträger (250) gekoppelt sind, der ein oder mehrere Planetenräder (251) trägt, die mit einem Zahnkranz (252) des Gehäuses kämmen.

4. Mechanisches Leistungsübertragungssystem nach einem der Ansprüche 1 bis 3, **dadurch gekennzeichnet, dass** der Betätigungsmechanismus (3, 4) eine Schneckenwelle (4) in einem Gehäuse und ein manuelles Bedienelement (10, 6) umfasst, die für einen Bediener an einem dem Motor gegenüberliegenden Ende der Schneckenwelle zugänglich ist und auf den Ausrückmechanismus (5) wirkt, um den Betätigungsmechanismus (3, 4) und den drehenden Motor (2) durch die Wirkung der Stange (6) zu entkoppeln, wobei die Stange (6) in eine mittlere Bohrung der Schneckenwelle (4) eingesetzt ist.

5. Mechanisches Leistungsübertragungssystem nach einem der Ansprüche 1 bis 4, **dadurch gekennzeichnet, dass** eine Blattfeder (7) oder ein Hebel das Antriebsteil (59) auf Abstand zu dem angetriebenen Teil (53) hält, wenn der Motor stillsteht, eine Druckfeder (62), die auf dem Motor (2) abgestützt ist, das Antriebsteil (59) gegen das angetriebene Teil (53) zurückführt.

6. Mechanisches Leistungsübertragungssystem nach einem der Ansprüche 1 bis 5, **dadurch gekennzeichnet, dass** das Antriebsteil (59) sechs Zapfen umfasst und die Aussparung des Antriebsteils (59) drei Zapfenausnehmungen umfasst.

7. Mechanisches Leistungsübertragungssystem nach einem der Ansprüche 1 bis 6, **dadurch gekennzeichnet, dass** das angetriebene Teil (soll, sol2, sol3, 53) und das Antriebsteil (59) aus Sintermetall sind.

8. Mechanisches Leistungsübertragungssystem nach einem der Ansprüche 1 bis 7, **dadurch gekennzeichnet, dass** der manuelle Drehaktuator (1) ein Handrad ist, eine Betätigung (10) des Leistungsübertragungssystems ein Entkoppeln des Handrads mit dem ersten Leistungseingang durch die Stange ermöglicht, die durch die Nabe geschoben wird, wenn die Klauenkupplung geschlossen ist.

9. Mechanisches Leistungsübertragungssystem nach einem der Ansprüche 1 bis 7, **dadurch gekennzeichnet, dass** die mittlere Kupplungsbohrung eine Keilwellenbohrung ist.

## Claims

1. Mechanical power transmission system for controlling a valve or a damper, the transmission system comprising an actuating mechanism (3, 4) for a shaft of the valve or the damper, the actuating mechanism (3, 4) having a first and a second power input, the system comprising a rotary motor (2) and a manual rotary actuator (1) coupled respectively to the first and second power inputs, a push-rod clutch mechanism (5) for disengaging said motor (2) from the first power input, the clutch mechanism (5) comprising a drive part (59) and a first driven part (Soll, Sol2, Sol3, 53) together constituting a dog clutch on a shaft, the transmission system being **characterized in that** the driven part (Soll, Sol2, Sol3, 53) has a toothed ring coupled to the first power input, at least one planet gear (51; 251) and a central bore for coupling with the first power input arranged at the center of a first drive part (50; 250) which in addition carries a recess of a second driven dog clutch part, the first driven part carrying shapes of a second drive part in addition to its shape of a driven dog clutch part, said driven part (Soll, Sol2, Sol3, 53) also having a central bore (505), the rod, to perform a disengagement, passing through both central bores and pushing a hub of the drive part (59).

2. The mechanical power transmission system according to claim 1, **characterized in that** the first input and the toothed ring of the driven part are coupled by one or more stepped planet gears (51a, 51b, 51c) fixed to the casing and a sun gear coupled to the first input.

3. The mechanical power transmission system according to claim 1, **characterized in that** the first input and the toothed ring of the driven part are coupled by a planet carrier (250) coupled to the first input and carrying one or more planet gears (251) meshing with a toothed ring (252) of the casing.

4. The mechanical power transmission system according to one of claims 1 to 3, **characterized in that** the actuating mechanism (3, 4) comprises a worm screw (4) in a casing, and a manual control (10, 6), accessible to an operator at one end of the worm screw opposite the motor, acting on the clutch mechanism (5) to decouple the actuating mechanism (3, 4) and the rotary motor (2) by the action of the rod (6), which rod (6) is inserted into a central bore of the worm screw (4).

5. The mechanical power transmission system according to one of claims 1 to 4, **characterized in that** a leaf spring (7) or a lever maintains the drive part (59) at a distance from the driven part (53) when the motor is stationary, a compression spring (62) bearing on the motor (2) returning the drive part (59) against the driven part (53).

6. The mechanical power transmission system according to one of claims 1 to 5, **characterized in that** the drive part (59) comprises six tenons and the recess of the drive part (59) comprises three tenon recesses.

7. The mechanical power transmission system according to one of claims 1 to 6, **characterized in that** the driven part (soll, sol2, sol3, 53) and the drive part (59) are made of sintered metal.

8. The mechanical power transmission system according to one of claims 1 to 7, **characterized in that** the manual rotary actuator (1) is a handwheel, a control (10) of the transmission system allowing decoupling of said handwheel from the first power input by the rod which is pushed by the hub when the dog clutch is closed.

9. The mechanical power transmission system according to one of claims 1 to 7, **characterized in that** the central coupling bore is a splined bore.
